# EUROPÄISCHE PATENTSCHRIFT

(11) **EP 1 566 336 B1**
(45) Veröffentlichungstag und Bekanntmachung des Hinweises auf die Patenterteilung: **07.02.2007**
(21) Anmeldenummer: 04004000.8
(22) Anmeldetag: 23.02.2004
(51) Int. Cl.: B64D 17/02, B64C 31/036

(54) **Gleit- bzw. Fallschirm**
Paraglider or parachute
Parapente ou parachute

(43) Veröffentlichungstag der Anmeldung: 24.08.2005
(73) Patentinhaber: Advance Thun AG, 3602 Thun (CH)
(72) Erfinder: Nef, Olivier, 1222 Vésenaz (CH)
(74) Vertreter: Troesch Scheidegger Werner AG

(56) Entgegenhaltungen:
- EP-A- 0 484 585
- DE-U- 29 516 836

## Beschreibung

Die vorliegende Erfindung betrifft ein Flug-, Segel- oder Schleppgerät, wie insbesondere einen Gleit-, einen Fallschirm mit einem blähbaren Stauraum oder ein so genanntes Kite, gemäss dem Oberbegriff nach Anspruch 1, sowie ein Verfahren zur Herstellung eines Gleit-, Fallschirmes oder eines so genannten Kites.

Gleitschirme weisen einen Flügel bzw. eine segelartige Tragfläche auf, im Wesentlichen bestehend aus einem Ober- und einem Untersegel, einschliessend einen in Kammern unterteilten Stauraum, welcher durch frontseitig am Flügel angeordnete Öffnungen mit Luft gefüllt wird. Bei Gleitschirmen, insbesondere für fortgeschrittene Piloten, ist es wichtig, dass, nebst Flugeigenschaften und Stabilität, der Luftwiderstand des Gleitschirmes möglichst gering ist, was einerseits erreicht werden kann durch eine möglichst ebenflächige Oberfläche des oberen Segels, und andererseits durch das Anordnen möglichst weniger Fang- oder Tragleinen für das Halten eines Piloten am Flügel bzw. am Tragsegel.

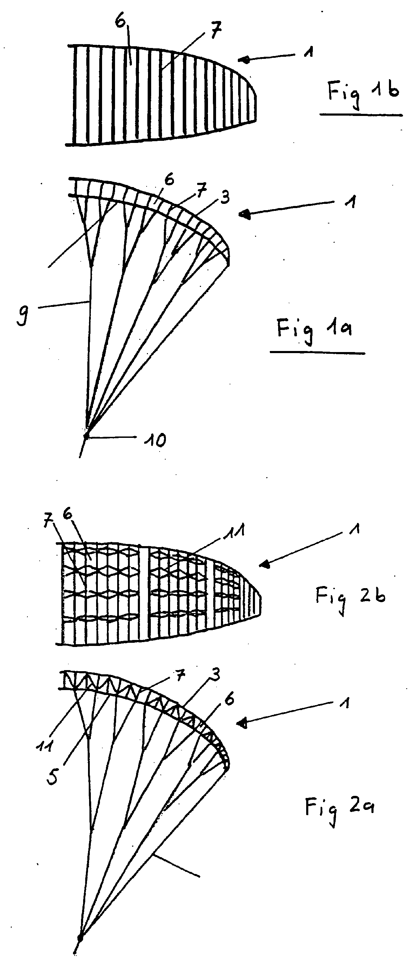

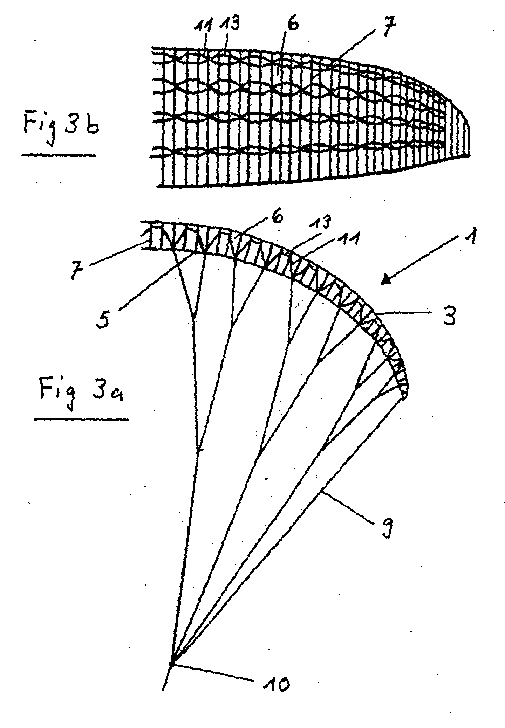

Um eine möglichst ebenflächige Oberfläche des Obersegels zu erhalten, wird vorgeschlagen, die Grösse der einzelnen Zellen bzw. Kammern des Stauraumes zu verkleinern bzw. die Anzahl Zellen bzw. Kammern im Gleitschirmstauraum zu erhöhen. Dies aber führt wieder zu einer Erhöhung der Anzahl Fang- bzw. Tragleinen, was, wie oben angeführt, unerwünscht ist. Für die Reduktion der Anzahl Fang- bzw. Tragleinen sind Vorschläge bekannt, wie beispielsweise aus dem deutschen Gebrauchsmuster 9007042.9 oder DE 295 16 836 U oder wie beschrieben im Artikel "Warum ist mein Gleitschirm krumm?" aus dem Magazin "Gleitschirm" 5/2001 unter Abschnitt "Gabeltricks". Weitere aus dem Stand der Technik bekannte Vorschläge sind in den beigefügten Figuren 1 bis 3 schematisch dargestellt.

In der EP 0 484 585 wird zudem ein Vorschlag dargelegt, wie die Oberfläche des Obersegels möglichst ebenflächig ausgebildet werden kann. Allerdings ist in dieser Druckschrift die Reduktion der Fang- bzw. Tragleinen kein Thema.

Aufgabe der vorliegenden Erfindung ist es, eine weitere Verbesserung vorzuschlagen, um den Luftwiderstand eines Gleitschirmes zu reduzieren. Im Speziellen besteht die Aufgabe der vorliegenden Erfindung darin, eine deutliche Verringerung des Luftwiderstandes zu erzielen durch Reduktion der gesamten Leinenwiderstandsfläche.

Erfindungsgemäss wird die gestellte Aufgabe mittels eines Flug-, Segel- oder Schleppgerätes, wie insbesondere eines Gleitschirms gemäss dem Wortlaut nach Anspruch 1, gelöst. Insbesondere wird die gestellte Aufgabe erfindungsgemäss gelöst, indem erstmalig eine Abspannung des Gleitschirmflügels bzw. schirmartigen Segels über mehr als drei Zellen möglich ist.

Bekanntlich bestehen ein Gleit- bzw. ein Fallschirm mit einem blähbaren Stauraum aus einem Flügel- bzw. einem segelartigen Schirm, aufweisend u.a. ein Ober- und ein Untersegel, wobei der Flügel bzw. das Segel quer zur Flugrichtung in Spannweitenrichtung ausgedehnt ausgebildet ist. Der im Innern des Flügels bzw. schirmartigen Segels ausgebildete Stauraum weist quer zur Spannweitenrichtung verlaufende Stauluftkammern auf, welche voneinander durch in der Regel luftdurchlässige Kammer- oder Zellwände getrennt sind, welche ebenfalls weitgehendst quer zur Spannweite des Flügels zwischen Ober- und Untersegel, diese miteinander verbindend, ausgebildet sind. Die Fang- oder Tragleinen, mittels welchen der Flügel bzw. das schirmartige Segel am Gurtzeug eines Piloten gehalten wird, sind am Untersegel wenigstens an einem Teil der Zellwände mit diesen verbunden angeordnet. Erfindungsgemäss wird nun vorgeschlagen, dass mindestens ein Teil der Fang- bzw. Tragleinen je an einer Kammer- bzw. Zellwand befestigt ist, welche eine grössere Höhe aufweisen als der Durchschnitt der übrigen Kammer- oder Zellwände, und dass beidseits neben einer Zellwand mit grösserer Höhe mindestens eine Zellwand angeordnet ist mit geringerer Höhe, welche Zellwand mit geringerer Höhe nicht von einer Fangleine gehalten wird.

Gemäss einer bevorzugten Ausführungsvariante wird vorgeschlagen, dass die grössere Höhe der Kammer- oder Zellwände in Richtung des Untersegels ausgeführt wird, sodass das Obersegel weiterhin eben gehalten werden kann.

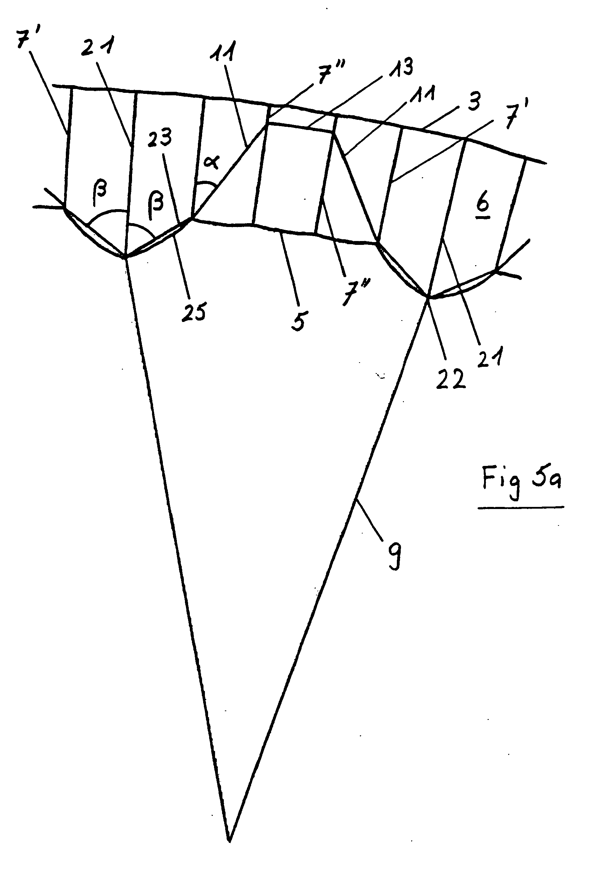

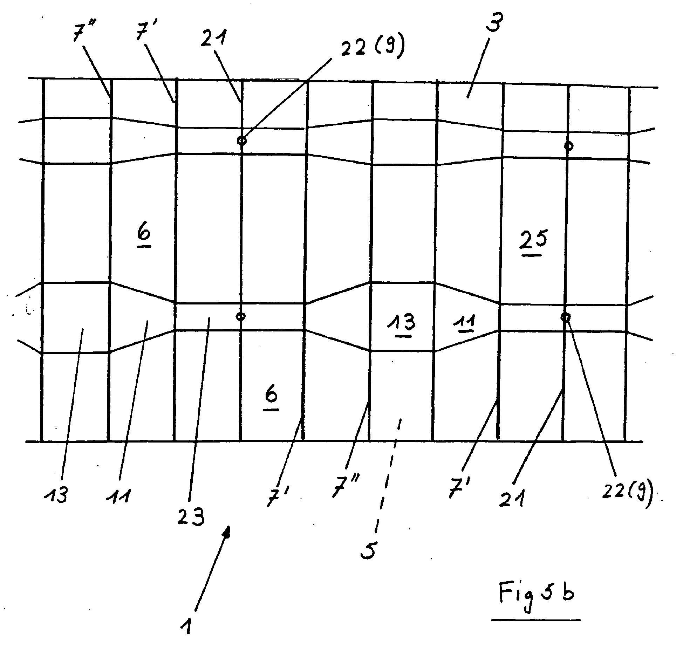

Gemäss einer weiteren bevorzugten Ausführungsvariante wird vorgeschlagen, dass die Höhe der grösseren Kammer- oder Zellwände so weit in Richtung des Untersegels ausgedehnt wird, dass der Winkel β (Fig. 5a) zwischen der Verbindungslinie von der höheren Kammer- oder Zellwand zur benachbarten Kammer- oder Zellwand mit geringerer Höhe und der höheren Kammer- oder Zellwand 80° oder weniger, vorzugsweise 65° oder weniger beträgt.

Gemäss wiederum einer weiteren Ausführungsvariante wird vorgeschlagen, dass in Spannweitenrichtung zwischen zwei Kammer- oder Zellwänden mit grösserer Höhe, welche mit Fang- oder Tragleinen verbunden sind, je mindestens drei Kammer- oder Zellwände mit geringerer bzw. reduzierter Höhe angeordnet sind, vorzugsweise mindestens vier Kammer- oder Zellwände.

Insbesondere im Fall, dass mindestens drei oder vier Zellwände mit geringerer Höhe zwischen zwei Kammer- bzw. Zellwänden mit grösserer Höhe angeordnet sind, sind die Kammer- oder Zellwände verbindende Verbindungselemente angeordnet, bei welchen es sich beispielsweise um streifen- bzw. bandartige Stabilisierungselemente handeln kann, welche sich in Spannweitenrichtung im Flügel bzw. segelartigen Schirm erstrecken, und welche beispielsweise wenigstens teilweise im Bereich des Untersegels angeordnet sind. Allerdings kann es sich bei diesen Verbindungselementen bzw. Stabilisierungselementen ebenfalls um Leinen, Gurtbänder, Folien und dergleichen handeln, welche dann als so genannte Distanzhalter dienen, wiederum um eine ebenflächige Ausbildung des Obersegels zu garantieren. Leinen als Verbindungselemente können beispielsweise auch in einem Gerüst eingebaut sein, mittels welchem zwei Kammer- bzw. Zellwände stabilisierend miteinander verbunden sind.

Diese Verbindungs- oder Stabilisierungselemente, wie beispielsweise streifen- oder bandartige Elemente, erstrecken sich in Spannweitenrichtung des Flügels bzw. segelartigen Schirmes beispielsweise zwischen zwei Befestigungsknoten von zwei in Spannweitenrichtung benachbart angeordneten Fangleinen, mittels welchen die Fang- oder Tragleinen jeweils an einer Kammer- oder Zellwand mit grösserer Höhe befestigt sind.

Wiederum gemäss einer weiteren Ausführungsvariante wird vorgeschlagen, dass mindestens zwei Kammer- oder Zellwände, angeordnet zwischen den mit Fang- oder Tragleinen gehaltenen Zellwänden, mit grösserer Höhe mittels vom Untersegel gegen das Obersegel hin verlaufenden streifen- oder bandartigen Elementen stabilisiert sind, wobei die Streifen bzw. Bänder beispielsweise vom Untersegel trapezförmig gegen das Obersegel hin auseinander laufend ausgebildet sein können.

Weitere bevorzugte Ausführungsvarianten sind in den abhängigen Ansprüchen charakterisiert, respektive werden anschliessend unter Bezug auf die beigefügten Figuren näher erläutert.

Weiter erfindungsgemäss wird ein Verfahren zum Herstellen eines erfindungsgemässen Gleit-, Fallschirmes oder eines Kites gemäss dem Wortlaut nach Anspruch 11 vorgeschlagen.

Wichtig gemäss dem beschriebenen Verfahren ist, dass von den für die Herstellung des Flügels bzw. schirmartigen Segels verwendeten Kammer- bzw. Zellwände innerhalb des Stauraumes einige eine grössere Höhe aufweisen, bzw. für diejenigen Kammer- oder Zellwände, welche von Trag- oder Fangleinen gehalten werden, solche mit grösserer Höhe gewählt werden.

Gemäss einer bevorzugten Ausführungsvariante des Verfahrens wird jeweils mindestens jede vierte vorzugsweise jede fünfte Kammer- oder Zellwand mit grösserer Höhe gewählt, an welcher Kammer- bzw. Zellwand je Fang- bzw. Tragleinen angeordnet werden für das Halten des Flügels bzw. segelartigen Schirmes am Gurtzeug eines Piloten.

Weiter werden jeweils zwischen zwei in Spannweitenrichtung des Flügels benachbarten Verbindungsknoten zwischen Trag- bzw. Fangleine und entsprechender Kammer- bzw. Zellwand stabilisierende Verbindungselemente, wie beispielsweise streifen- oder bandartige Stabilisierungselemente, angeordnet, welche entweder beispielsweise im Bereich des Untersegels oder aber vom Untersegel schräg gegen das Obersegel hin verlaufend angeordnet werden.

Wiederum weitere bevorzugte Ausführungsvarianten des Verfahrens sind in abhängigen Ansprüchen charakterisiert.

Die Erfindung wird nun beispielsweise und unter Bezug auf die beigefügten Figuren näher erläutert.

Dabei zeigen:
- Fig. 1a & b: ausschnittsweise schematisch einen Gleitschirm bekannt aus dem Stand der Technik von vorne und von oben gesehen;
- Fig. 2: wiederum schematisch ausschnittsweise einen Gleitschirm bekannt aus dem Stand der Technik von vorne und von oben gesehen;
- Fig. 3a & b: erneut ausschnittsweise einen Gleitschirm bekannt aus dem Stand der Technik von vorne und von oben gesehen;
- Fig. 4a & b: ausschnittsweise schematisch einen Gleitschirm gemäss der vorliegenden Erfindung von vorne und von oben gesehen,
- Fig. 5: einen Ausschnitt aus Fig. 4, d.h. eines erfindungsgemässen Gleitschirmes, von vorne gesehen;
- Fig. 5b: einen Ausschnitt aus Fig. 4b, d.h. eines erfindungsgemässen Gleitschirmes, von oben auf den Flügel gesehen und
- Fig. 6: in Perspektive einen Tragflügel eines erfindungsgemässen Gleitschirmes.

In den Figuren 1a und 1b ist eine aus dem Stand der Technik bekannte Ausführungsvariante eines Gleitschirmes dargestellt. Dabei zeigt Fig. 1a einen Ausschnitt des Gleitschirmes 1 von vorne gegen die Profilnase gesehen, aufweisend ein Obersegel 3 und ein Untersegel 5, wobei der zwischen den Segeln ausgebildete Stauraum 6 durch Kammer- oder Zellwände 7 unterteilt ist. Der Gleitschirm wird gehalten durch Fang- oder Tragleinen 9, welche den Schirm bzw. Flügel 1 an einem Gurtzeug 10 eines Piloten halten.

Fig. 1b zeigt den Schirm 1 von oben gesehen, wobei insbesondere die auf dem Obersegel quer zur Spannweitenrichtung bzw. in Längsrichtung (Flugrichtung) verlaufenden Verbindungsnähte zu den Kammer- oder Zellwänden 7 erkennbar sind.

Fig. 2 zeigt erneut schematisch und ausschnittsweise einen Gleitschirm 1 bekannt aus dem Stand der Technik. Die in Fig. 2 dargestellte Lösung zeigt einen Ansatz zur Reduktion der Anzahl Fang- bzw. Tragleinen 9. Dies wird dadurch erreicht, dass nicht von jeder Kammer- bzw. Zellwand 7 eine Fang- bzw. Tragleine mit dem Gurtzeug des Piloten verbunden ist, sondern jeweils jede dritte Kammer- oder Zellwand mittels schräg vom Unter- zum Obersegel verlaufender Gurten oder Bänder 11 stabilisiert ist.

Fig. 3 zeigt erneut einen aus dem Stand der Technik bekannten Gleitschirm 1, wobei die Anzahl Trag- bzw. Fangleinen erneut reduziert wurde. Zwischen zwei je mit einer Fangleine gehaltenen Kammer- oder Zellwand 7 sind je zwei Kammer- bzw. Zellwände mittels schräg aufwärts verlaufenden Bändern, Gurten oder Leinen 11 und einem als so genannte Brücke 13 ausgebildeten Band stabilisiert. Dabei zeigt erneut Fig. 3a den Gleitschirm von vorn gegen die Profilnase und Fig. 3b eine Ansicht auf die Oberseite des Flügels bzw. Schirmes 1.

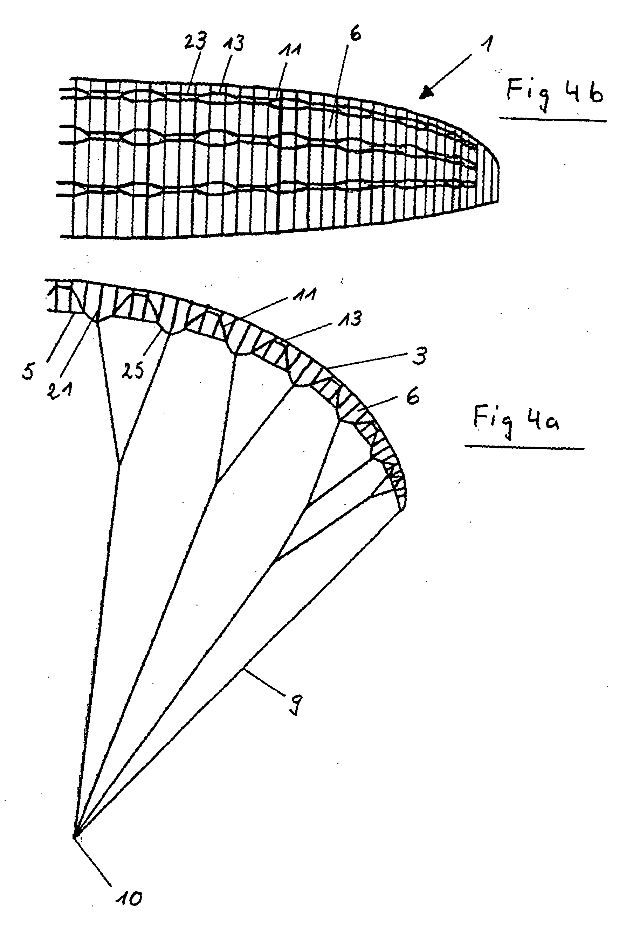

Figuren 4 und 5 zeigen einen Gleitschirm 1 wie erfindungsgemäss vorgeschlagen. Dabei ist erneut in Fig. 4a der erfindungsgemässe Gleitschirm im Schnitt von vorne gesehen dargestellt und Fig. 4b in Draufsicht auf das Obersegel des Flügels bzw. Schirmes 1. In Fig. 4a deutlich erkennbar ist die weitere Reduktion der Fang- bzw. Tragleinen 9. Diese Reduktion wird erreicht, indem nur noch jede fünfte Kammer- bzw. Zellwand 7 durch eine Fang- bzw. Tragleine 9 gehalten wird bzw. mit dem Gurtzeug eines Piloten verbunden ist. Dabei sind diese je mit einer Fangleine 9 verbundenen Kammer- bzw. Zellwände, wie insbesondere ausschnittsweise in Fig. 5a deutlich erkennbar, über die Ebene des Untersegels hinaus mit einer grösseren Höhe ausgebildet, als die übrigen Kammer- bzw. Zellwände. Die Kammer- bzw. Zellwände mit grösserer Höhe sind in den Figuren 4 und 5 mit dem Bezugszeichen 21 versehen. Es hat sich nun erfindungsgemäss gezeigt, dass trotz dieser Ausbildung der Kammer- bzw. Zellwände 21 mit einer grösseren Höhe eine ausgeprägte Wellenform am Obersegel 3 weitgehendst verhindert werden kann, indem die grössere Höhe der Kammer- bzw. Zellwände 21 über die Ebene des Untersegels hinaus ausgebildet ist. Wesentlich ist, wie eingangs gefordert, dass für die Reduktion des Luftwiderstandes die Oberfläche des Obersegels 3 weitgehendst ebenflächig ausgebildet ist. Die sich am Untersegel 5 durch die erfindungsgemäss vorgeschlagene Konstruktion in Querrichtung zur Flügelausdehnung ergebenden Wellenformen 25 des Untersegels 5 sind für die Flugeigenschaften des Gleitschirmes nicht hinderlich, da der Luftwiderstand am Untersegel einen weit geringeren Einfluss ausübt, als ein allfällig am Obersegel 3 entstehender Luftwiderstand.

Die Höhe der grösseren Kammer- oder Zellwände 21 wird dabei soweit in Richtung des Untersegels 5 ausgedehnt, dass der Winkel β, wie dargestellt in Fig. 5a, zwischen der Verbindungslinie von der höheren Kammer- oder Zellwand zur benachbarten Kammer- oder Zellwand mit geringerer Höhe und der höheren Kammer- oder Zellwand 80° oder weniger, vorzugsweise 65° oder weniger beträgt.

Um die ebenflächige Ausgestaltung des Obersegels 3 zu unterstützen, sind zwischen zwei in Spannweitenrichtung benachbarten Verbindungsknoten 22 der Fangleinen 9 je mit der Kammer- oder Zellwand 21 streifen- oder bandartige Elemente 23, 11 und 13 angeordnet, welche insbesondere in Fig. 5b deutlich erkennbar sind. Dabei verläuft zunächst zwischen dem Verbindungspunkt 22 und je den beiden benachbart zur Zellwand 21 angeordneten Kammer- bzw. Zellwänden 7', beispielsweise ein Stabilisierungsband 23, welches weitgehend im Bereich des leicht gewölbten Untersegels 25 verläuft. Um die weiteren zwischen den beiden Kammer- oder Zellwänden 7' angeordneten Kammer- bzw. Zellwände 7" zu stabilisieren, sind einerseits je schräg von Untersegel 5 zum Obersegel 3 hin verlaufende Stabilisierungsbänder 11 vorgesehen, sowie wie weiter optional zwischen den beiden weiteren Kammer- bzw. Zellwänden 7" eine brückenartiges Band 13. Dabei ist in der Fig. 5b erkennbar, dass die schräg vom Untersegel zum Obersegel hin verlaufenden Stabilisierungsbänder vom Unterzum Obersegel hin beispielsweise trapezförmig auseinander laufend ausgebildet sind. Allerdings ist es nicht zwingend notwendig, dass diese Stabilisierungsbänder 11 bis an das Obersegel 3 hin verlaufend ausgebildet sind. Bevorzugt ist lediglich, dass die beiden Kammer- bzw. Zellwände 7" in der oberen Hälfte zwischen Unter- und Obersegel stabilisiert sind. Damit ergibt sich, dass der zwischen trapezförmigem Stabilisierungsband 11 und Kammer- bzw. Zellwand 7' ausgebildete Winkel α in der Regel ≤ 45° ist.

Die in den Figuren 5a und 5b dargestellten und beschriebenen Stabilisierungsbänder 23, 11 und 13 sind vorzugsweise aus demselben Material gefertigt, aus welchem das Ober- und Untersegel bzw. die Kammer- oder Zellwände bestehen. Dabei eignen sich insbesondere alle heute gebräuchlichen Materialien, und die Materialwahl ist an sich nicht Bestandteil der vorliegenden Erfindung.

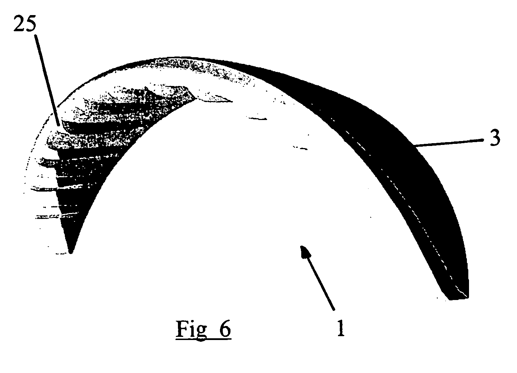

Fig. 6 zeigt in Perspektive den gesamten Flügel- bzw. segelartigen Schirm eines Gleitschirmes 1, aufweisend auf der Unterseite bzw. am Untersegel die erfindungsgemäss vorgeschlagenen wellenförmigen Ausbuchtungen 25, an welchen die Fang- bzw. Tragleinen befestigt sind. Der grosse Vorteil der Erfindung zeigt sich in Fig. 6, indem trotz der Verwendung relativ weniger Fang- bzw. Tragleinen, die Oberfläche des Obersegels 5 weitgehendst ebenflächig ausgebildet ist, was einen geringen Luftwiderstand garantiert. Dieser Vorteil wird weiter dadurch unterstützt bzw. ermöglicht, indem die Anzahl Fang- bzw. Tragleinen reduziert werden kann im Vergleich zu herkömmlichen Gleitschirmen, wodurch sich eine Gewichtsreduktion ergibt und zudem das Problem des Verfangens von Leinen kleiner wird. Die ebenflächige Ausbildung des Obersegels wird insbesondere durch die unter Bezug auf die beiden Figuren 5a und 5b detailliert gezeigten Stabilisierungen derjenigen Kammern- bzw. Zellen erreicht, welche je zwischen zwei Kammer- bzw. Zellwänden ausgebildet sind, die durch Trag- bzw. Fangleinen mit einen Gurtzeug eines Piloten verbunden sind.

Die unter Bezug auf die Figuren 4 bis 6 dargestellten Ausführungen eines erfindungsgemässen Gleitschirmes 6 dienen lediglich dem besseren Verständnis der vorliegenden Erfindung und die erfindungsgemäss dargestellten Merkmale können auf x-beliebige Art und Weise ergänzt modifiziert oder abgeändert werden. Anstelle der unter Bezug auf die Figuren 4 bis 6 dargestellten Stabilisatoren sind selbstverständlich auch andere Verbindungselemente geeignet bzw. denkbar, wie beispielsweise Leinen, welche beispielsweise in Gerüstform zwischen zwei Zellwänden angeordnet werden können. Aber auch Gurte, Netzwerke, Folien und dergleichen können als stabilisierende Verwendungselemente verwendet werden. Auch die Materialwahl sowohl der Trag- bzw. Fangleinen, des Segels bzw. Flügels, der Trenn- oder Kammerwände, sowie der Stabilisatoren, ist an sich kein Bestandteil der vorliegenden Erfindung und alle im Gleitschirm- oder Fallschirmbau bevorzugt eingesetzten Materialien können für die erfindungsgemässe Ausgestaltung eines Gleitschirmes verwendet werden. Erfindungswesentlich ist an sich ein Gleitschirm, wie er gemäss dem Wortlaut nach Anspruch 1 charakterisiert ist.

## Patentansprüche

1. Flug-, Segel- oder Schleppgerät, wie insbesondere Gleitschirm, Fallschirm oder ein so genanntes Kite mit einem blähbaren Stauraum, aufweisend einen Flügel bzw. einen segelartigen Schirm (1), bestehend aus einem Ober- und einem Untersegel (3,5) mit zur Flügel- bzw. Schirmspannweite quer verlaufenden Stauluftkammern (6), voneinander getrennt durch Kammer- oder Zellwände (7, 7' , 7" , 21), sowie Fang- oder Tragleinen (9), mittels welchen der Flügel bzw. Schirm am Gurtzeug (10) eines Piloten gehalten wird, **dadurch gekennzeichnet, dass** mindestens ein Teil der Fangleinen (9) je an einer Kammer- oder Zellwand (21) befestigt ist, welche eine grössere Höhe aufweisen, als der Durchschnitt der übrigen Zellwände (7,7',7"), und dass je beidseits neben einer Zellwand (21) mit grösserer Höhe mindestens eine Zellwand (7') mit geringerer Höhe angeordnet ist, welche Zellwände nicht an einer Fang- bzw. Tragleine gehalten werden.

2. Flug-, Segel- oder Schleppgerät nach Anspruch 1, **dadurch gekennzeichnet, dass** die Abspannung des Flügels bzw. segelartigen Schirmes (1) über mehr als drei Zellen ausgebildet ist.

3. Flug-, Segel- oder Schleppgerät nach einem der Ansprüche 1 oder 2, **dadurch gekennzeichnet, dass** die grössere Höhe der Kammer- oder Zellwände (21) in Richtung des Untersegels bzw. über die Ebene des Untersegels hinaus ausgebildet ist, sodass das Obersegel (3) weitgehendst ebenflächig ausgebildet ist.

4. Flug-, Segel- oder Schleppgerät nach einem der Ansprüche 1 bis 3, **dadurch gekennzeichnet, dass** die Höhe der höheren Kammer- oder Zellwände so weit in Richtung des Untersegels über die übrigen Kammer- oder Zellwände (7,7',7") hinaus ausgedehnt ist, dass der Winkel (β) zwischen der Verbindungslinie von der höheren Kammer- oder Zellwand zur benachbarten Kammer- oder Zellwand mit geringerer Höhe und der höheren Kammer- oder Zellwand 80° oder weniger, vorzugsweise 65° oder weniger beträgt.

5. Flug-, Segel- oder Schleppgerät nach einem der Ansprüche 1 bis 4, **dadurch gekennzeichnet, dass** zwischen zwei Kammer- oder Zellwänden (21) mit grösserer Höhe je mindestens drei Kammer- oder Zellwände (7,7',7") mit geringerer bzw. reduzierter Höhe angeordnet sind, wobei zusätzlich mindestens eine der Kammer- oder Zellwände mit geringerer Höhe mittels Verbindungselementen, wie beispielsweise streifen- oder bandartigen Elementen, stabilisiert ist, Verbindungselemente (11,13,23) je im Bereich der benachbart zur stabilisierten Kammer- oder Zellwand angeordneten Stauräume verlaufen.

6. Flug-, Segel- oder Schleppgerät nach einem der Ansprüche 1 bis 5, **dadurch gekennzeichnet, dass** die Kammer- oder Zellwände (21) mit grösserer Höhe und gehalten von Fangleinen (9) an den Verbindungen (22) mit dem Untersegel im Bereich der Fangleinen je beidseitig mit den bzw. gegen die benachbarten Zellwände (-n) (7') mittels einem Verbindungselement, wie beispielsweise einem streifen-, gurten- oder bandartigen Element (23), verbunden bzw. stabilisiert sind.

7. Flug-, Segel- oder Schleppgerät nach einem der Ansprüche 1 bis 6, **dadurch gekennzeichnet, dass** mindestens zwei der zwischen den mittels Fangleinen gehaltenen Kammer- bzw. Zellwänden mit grösserer Höhe angeordneten Zellwände (7") mit geringerer Höhe mittels vom Untersegel (5) gegen das Obersegel (3) hin verlaufenden Verbindungselementen, wie beispielsweise streifen- oder bandartigen Elementen (11), stabilisiert sind, wobei im Falle von streifen- oder bandartigen Elementen diese vorzugsweise vom Untersegel gegen das Obersegel hin trapezförmig auseinanderlaufend ausgebildet sind.

8. Flug-, Segel- oder Schleppgerät nach einem der Ansprüche 1 bis 7, **dadurch gekennzeichnet, dass** zwischen zwei mittels Fangleinen gehaltenen Kammer- oder Zellwänden mit grösserer Höhe mindestens vier Kammer- bzw. Zellwände (7',7") mit geringerer Höhe angeordnet sind, wobei zwischen den beiden mittigen Zellwänden (7") mit geringerer Höhe ein parallel zum Obersegel (3) verlaufender streifen-, netz-, gurten- oder bandartiger Stabilisator (13) in Form eines Steges oder einer Brücke ausgebildet ist, wobei der brücken- oder stegartige Stabilisator in der oberen Hälfte des jeweiligen Stauraumes zwischen Unter- und Obersegel im Wesentlichen parallel zum Obersegel verläuft.

9. Flug-, Segel-oder Schleppgerät nach einem der Ansprüche 1 bis 8, **dadurch gekennzeichnet dass** jeweils in der Tiefe des Flügels bzw. segelartigen Schirmes (1) voneinander beabstandet mindestens zwei, ggf. drei, im Falle eines Gleit- oder Fallschirmes vorzugsweise mindestens vier Fang- bzw. Tragleinen an ein und derselben Kammer- bzw. Zellwand (21) mit grösserer Höhe angeordnet sind.

10. Flug-, Segel- oder Schleppgerät nach einem der Ansprüche 1 bis 9, **dadurch gekennzeichnet, dass** als stabilisierende Verbindungselemente zwischen Kammer- oder Zellwänden (7,7',7" ,21) Leinen, Netze, Gurten, Bänder, dreidimensionale Netzwerke und dergleichen verwendet werden.

11. Verfahren zur Herstellung eines Gleit- bzw. Fallschirmes oder eines so genannten Kites nach einem der Ansprüche 1 bis 10, **dadurch gekennzeichnet, dass** mindestens jede vierte, vorzugsweise jede fünfte Kammer- bzw. Zellwand vorzugsweise in Richtung über die Ebene des Untersegels hinaus länger bzw. höher ausgebildet wird als die übrigen Kammer- oder Zellwände, und dass an diesen Kammer- oder Zellwänden mit grösserer Höhe die Fang- bzw. Tragleinen befestigt werden, und dass wenigstens ein Teil der zwischen den Kammer- oder Zellwänden mit grösserer Höhe angeordneten Kammer- oder Zellwände mit geringerer Höhe mittels Verbindungselementen stabilisiert werden.

12. Verfahren nach Anspruch 11, **dadurch gekennzeichnet, dass** die Kammer- oder Zellwände mittels zwischen diesen angeordneten Leinen, Netzwerken, Gurten, streifenartigen Bändern, dreidimensionalen Netzwerken, Geweben und dergleichen stabilisiert werden.

## Claims

1. Flying, sailing or towing device such as in particular a hang glider canopy, parachute or so-called kite with an inflatable ram chamber, having a wing or a sail-like canopy (1) consisting of an upper and a lower sail (3, 5) with ram air chambers (6) that run transverse to the span of the wing or canopy and are separated from each other by chamber or cell walls (7, 7', 7", 21), and rigging or support lines (9) by means of which the wing or canopy is attached to the harness (10) of a pilot, **characterised in that** at least part of the rigging lines (9) are each attached to a chamber or cell wall (21) which has a greater height than the average of the other cell walls (7, 7', 7") and that on each side next to a cell wall (21) of greater height is arranged at least one cell wall (7') of lesser height, which cell walls are not held on a rigging or support line.

2. Flying, sailing or towing device according to claim 1, **characterised in that** span of the wing or sail-like canopy (1) is formed over more than three cells.

3. Flying, sailing or towing device according to any of claims 1 or 2, **characterised in that** the greater height of the chamber or cell walls (21), in the direction of the lower sail or beyond the plane of the lower sail, is formed so that the upper sail (3) is formed largely flat.

4. Flying, sailing or towing device, according to any of claims 1 to 3, **characterised in that** the height of the higher chamber or cell walls extends so far in the direction of the lower sail beyond the other chamber or cell walls (7, 7', 7") that the angle (β) between the connecting line of the higher chamber or cell wall to the adjacent chamber or cell wall of lesser height and the higher chamber or cell wall amounts to 80° or less, preferably 65° or less.

5. Flying, sailing or towing device according to any of claims 1 to 4, **characterised in that** between two chamber or cell walls (21) of greater height are arranged at least three chamber or cell walls (7, 7', 7") of lesser or reduced height, where in addition at least one of the chamber or cell walls of lesser height is stabilised by means of connecting elements such as for example strip- or strap-like elements, which connecting elements

6. Flying, sailing or towing device according to any of claims 1 to 5, **characterised in that** the chamber or cell walls (21) of greater height and held by the rigging lines (9) at the connections (22) with the lower sail in the area of the rigging lines are stabilised on both sides with or against the adjacent cell wall(s) (7') by means of a connecting element such as for example a strip, strap or band-like element (23).

7. Flying, sailing or towing device according to any of claims 1 to 6, **characterised in that** at least two of the cell walls (7") of lesser height arranged between the cell or chamber walls of greater height held by rigging lines are stabilised by means of connecting elements, such as for example strip- or strap-like elements (11), running from the lower sail (5) towards the upper sail (3), where in the case of strip- or strap-like elements these are preferably formed running apart in trapezoid shape from the lower sail towards the upper sail.

8. Flying, sailing or towing device according to any of claims 1 to 7, **characterised in that** between two chamber or cell walls of greater height held by means of rigging lines are arranged at least four chamber or cell walls of lesser height (7', 7") wherein between the two central cell walls (7") of lesser height is formed a stabiliser as a strip, net, band or strap running parallel to the upper sail (3) in the form of a web or a bridge, where the bridge- or web-like stabiliser (13) runs substantially parallel to the upper sail in the upper half of the ram chamber concerned between the upper and lower sail.

9. Flying, sailing or towing device according to any of claims 1 to 8, **characterised in that** in each case spaced apart over the depth of the wing or sail-like canopy (1) are at least two, where applicable three, in the case of a hang glider canopy or parachute preferably at least four rigging or support lines arranged on the same chamber or cell wall (21) of greater height.

10. Flying, sailing or towing device according to any of claims 1 to 9, **characterised in that** as stabilising connecting elements between the chamber or cell walls (7, 7', 7", 21) are used lines, nets, bands, straps, three-dimensional nets and similar.

11. Method for production of a hang glider canopy or parachute or a so-called kite according to any of claims 1 to 10, **characterised in that** at least every fourth, preferably every fifth chamber or cell wall, preferably in the direction beyond the plane of the lower sail, is formed longer or higher than the other chamber or cell walls, and that at these chamber or cell walls of greater height are attached the rigging or support lines, and that at least part of the chamber or cell walls of lesser height arranged between the chamber and cell walls of greater height are stabilised by means of connecting elements.

12. Method according to claim 11, **characterised in that** the chamber or cell walls are stabilised by means of lines, nets, bands, strap-like bands, three-dimensional networks, woven fabrics and similar arranged between these.

## Revendications

1. Appareil volant, planeur ou remorqueur, notamment parapente, parachute ou cerf-volant de type kite, avec un espace gonflable et comprenant une aile ou une voile en forme de parapluie (1) formée d'une voile supérieure et d'une voile inférieure (3, 5) avec des chambres à pression dynamique (6) s'étendant transversalement à l'envergure de l'aile et séparées par des cloisons de cellule (7, 7', 7' ', 21), ainsi que des cordes de suspension (9) au moyen desquelles l'aile ou la voile est fixée aux sangles (10) d'un pilote, **caractérisé en ce qu'**au moins certaines des cordes de suspension (9) sont fixées chacune sur une cloison de cellule (21) présentant une hauteur plus grande que la moyenne des autres cloisons de cellule (7,7',7 ") et **en ce que** de chacune côté de chaque cloison de cellule (21) ayant une hauteur surhaussée est prévue au moins une cloison de cellule (7') de hauteur plus petite, ces dernières cloisons n'étant pas retenues par une corde de suspension.

2. Appareil volant, planeur ou remorqueur selon la revendication 1, **caractérisé en ce que** l'en envergure de l'aile (1) s'étend sur plus de trois cellules.

3. Appareil volant, planeur ou remorqueur, selon l'une des revendications 1 ou 3, **caractérisé en ce que** la hauteur surhaussée des cloisons de cellule (21) s'étend en direction de la voile inférieure respectivement au-delà du plan de la voile inférieure, de manière à ce que la voile supérieure (3) aie pratiquement une forme plane.

4. Appareil volant, planeur ou remorqueur selon l'une des revendications 1 à 3, **caractérisé en ce que** la hauteur des cloisons de cellule surhaussées s'étend en direction de la voile inférieure au-delà des autres cloisons de cellule (7, 7', 7'') et **en ce que** l'angle (β) entre la ligne joignant la cloison de cellule surhaussée et la cloison de cellule voisine à hauteur plus petite est 80° ou moins, de préférence 65° ou moins.

5. Appareil volant, planeur ou remorqueur selon l'une des revendications 1 à 4, **caractérisé en ce qu'**entre deux cloisons (21) à hauteur surhaussée sont prévues chaque fois au moins trois cloisons (7, 7', 7'') à plus petite hauteur ou hauteur réduite, au moins l'une des cloisons de cellule à hauteur réduite étant en plus stabilisée par des éléments de liaison, comme par exemple par des éléments en forme de lames ou bandes, ces éléments de liaison (11, 13, 23) s'étendant dans la zone des chambres à pression dynamique voisines de la cloison de cellule à stabiliser.

6. Appareil volant, planeur ou remorquer selon l'une des revendications 1 à 5, **caractérisé en ce que** les cloisons de cellule (21) à hauteur surhaussée retenues par des cordes de suspension (9) sont connectées respectivement stabilisées avec les éléments de liaison (22) et ainsi avec les voiles inférieures dans la zone des cordes, à chaque instance des deux côtes avec respectivement contre les cloisons de cellule voisines (7), au moyen d'un élément de liaison comme par exemple au moyen d'un élément en forme de lame, sangle ou bande (23).

7. Appareil volant, planeur ou remorquer selon l'une des revendications 1 à 6, **caractérisé en ce qu'**au moins deux des cloisons de cellule (7'') à hauteurs réduite, disposées entre les cloisons de cellule à hauteur surhaussée et retenues par des sangles de suspension sont stabilisées par des éléments de liaison s'étendant de la voile inférieure (5) vers la voile supérieure (3), comme par exemple par des éléments en forme de lame ou de bande (11), avec, dans le cas d'éléments en forme de lame ou de bande, les éléments se développant de préférence de manière divergente sous forme trapézoïdale de la voile inférieure vers la voile supérieure.

8. Appareil volant, planeur ou remorquer selon l'une des revendications 1 à 7, **caractérisé par** au moins quatre cloisons de cellule (7', 7'') à hauteur réduite disposées entre deux cloisons de cellule à hauteur surhaussée et retenues par des sangles de suspension, un stabilisateur (13) sous forme de lame filet ou bande s'étendant parallèlement à la voile supérieure entre les deux cloisons de cellule (7'') à hauteur réduite du milieu et formant ainsi une passerelle ou un pont ce stabilisateur en forme de pont ou de passerelle s'étendant à chaque fois, dans la moitié supérieure de la chambre à pression dynamique entre la voile inférieure et la voile supérieure essentiellement parallèlement à la voile supérieure.

9. Appareil volant, planeur ou remorquer selon l'une des revendications 1 à 8, **caractérisé en ce que** dans la profondeur de l'aile (1) sont prévues au moins deux ou en l'occurrence trois, dans le cas d'un parapente ou d'un parachute de préférence quatre cordes de suspension fixées sur la même cloison de cellule (21) à hauteur surhaussée.

10. Appareil volant, planeur ou remorquer selon l'une des revendications 1 à 9, **caractérisé en ce que** l'on utilise comme éléments de liaison stabilisants entre les cloisons de cellule (7, 7', 7 " , 21) des cordes, filets, lames, bandes, systèmes de filets à trois dimensions ou similaires.

11. Procédé de fabrication d'un parapente, parachute ou cerf-volant du type kite selon l'un des revendications 1 à 10, **caractérisé en ce que** l'on forme au moins chaque quatrième, de préférence chaque cinquième cloison de cellule plus longue respectivement plus haute que le reste des cloisons de cellule, de préférence en direction au-delà du plan de la voile inférieure, et **en ce que** l'on fixe les cordes de suspension à ces cloisons de cellule de hauteur surhaussée, et **en ce que** l'on stabilise au moins une partie des cloisons de cellule à hauteur réduite disposées entre les cloisons de cellule à plus grande hauteur au moyens d'éléments de liaison.

12. Procédé selon la revendication 11, **caractérisé en ce que** les cloisons de cellule sont stabilisées par des cordes, filets, lames, bandes, systèmes de filets à trois dimensions, tissus ou similaires arrangés entre les dites cloisons.
